# EUROPEAN PATENT SPECIFICATION

(11) **EP 3 648 195 B1**
(45) Date of publication and mention of the grant of the patent: **06.04.2022**
(21) Application number: 19188736.3
(22) Date of filing: 29.07.2019
(51) Int. Cl.: H01M 10/615, H01M 10/617, H01M 10/625, H01M 50/20, H01M 50/24

(54) **BATTERY PACK**
BATTERIEPACK
BLOC-BATTERIE

(30) Priority: 02.11.2018 CN 201811300970
(43) Date of publication of application: 06.05.2020
(73) Proprietor: Contemporary Amperex Technology Co., Limited, Jiaocheng District Ningde City, Fujian 352100 (CN)
(72) Inventor: ZHENG, Wanxin, Ningde City, Fujian 352100 (CN); QIAN, Mu, Ningde City, Fujian 352100 (CN)
(74) Representative: Vigand, Philippe

(56) References cited:
- WO-A1-2012/065853
- WO-A1-2014/000933
- JP-A- 2002 141 036
- US-A1- 2008 063 934

## Description

### TECHNICAL FIELD

The present disclosure relates to the technical field of batteries, more particular to a battery pack.

### BACKGROUND

Due to rapid development of the new energy vehicle industry, new energy vehicles have gradually replaced fuel vehicles and have been used more and more widely. In order to improve the cruising range and safety performance of automobiles, various automobile manufacturers are working to improve the energy density of battery modules. At present, the chemical system is relatively mature, and it is difficult to get a big improvement in the short term. Therefore, it has become a preferred solution at present that the structural design optimization is performed on the battery module to reduce the weight and save the occupied space, thereby improving the energy density of the battery module.

In some special operating conditions, due to the operating temperature environment requirements of the battery module, it is often necessary to heat the battery module, but the thermal insulation performance of the existing battery pack is poor, and the charging time of the battery module is longer.

WO 2014/0000933 A1 and WO 2012/065853 A1 have disclosed related technical technologies on how to make the battery operate normally within an ideal operating temperature range. However the technologies cannot obtain a good thermal insulation effect of the battery, thereby increasing the service life of the battery. US 2008/0063934 A1 discloses spring damping elements coupled to a mounting rail provided in a space between a battery housing and a plurality of rectangular cell assembly modules.

### SUMMARY

According to an inventive embodiment, there is provided a battery pack, including:
- at least one battery module; and
- a battery housing, configured to accommodate the battery module;
   where the battery module is detachably disposed on a bottom wall of the battery housing, and a thermal insulation component is disposed between the battery module and the bottom wall of the battery housing; the thermal insulation component has at least one layer of damping structure; the thermal insulation component has a thermal conductivity of < 0.3 W·m⁻¹·K⁻¹; the thermal insulation component has a compressive strength of > 350 MPa; the thermal insulation component has a tensile strength of > 300 MPa; and the thermal insulation component has a yield strength of > 200 MPa.

In an embodiment of the present disclosure, the battery module has a module case for accommodating a plurality of batteries.

The module case and the battery housing each have a conductive portion made of metal, the conductive portion of the module case is equipotential connected to the conductive portion of the battery housing through a conductive fixed part, and the conductive fixed part passes through the thermal insulation component.

In an embodiment of the present disclosure, the conductive portion of the module case is provided with a fixed foot near one end of the battery housing.

The conductive portion of the battery housing has a first through hole fitted with the fixed foot.

The fixed foot and the corresponding first through hole fitted are connected by a fixed part. In an embodiment of the present disclosure, the fixed part is a conductive fixed part. Therefore, the fixed part and the conductive fixed part are used interchangeably herein.

The thermal insulation component is disposed between the fixed foot and the conductive portion of the battery housing.

In an embodiment of the present disclosure, the conductive portion of the battery housing is further provided with a nut fitted into the first through hole.

The fixed part has a thread structure; the fixed part matches with the nut for connecting the battery module and the battery housing.

The thermal insulation component is disposed between the battery module and the nut.

In an embodiment of the present disclosure, the bottom end of the fixed part pass through the thermal insulation component and be inserted into the first through hole, and the fixed part is a conductive fixed part.

In an embodiment of the present disclosure, the thermal insulation component has a limit structure, and the nut has a flange face.

The limit structure is fitted with the flange face of the nut.

In an embodiment of the present disclosure, the limit structure is a groove structure, and the groove structure is located on a side of the thermal insulation component near the nut.

In an embodiment of the present disclosure, the thermal insulation component includes at least one second through hole.

The groove structure is disposed coaxially with the second through hole.

In an embodiment of the present disclosure, the thermal insulation component includes at least two second through holes and two groove structures respectively disposed coaxially with the two second through holes.

In an embodiment of the present disclosure, the thermal insulation component includes a plurality of thermal insulation pads.

In an embodiment of the present disclosure, the thermal insulation component is a single-hole thermal insulation pad, and/or a double-hole thermal insulation pad; or the thermal insulation component is a semi-open thermal insulation pad, a rectangular outer contour thermal insulation pad, and/or a strip thermal insulation pad.

In an embodiment of the present disclosure, the thermal insulation component has a thickness of 2-8 mm.

In the battery pack provided by some embodiments of the present disclosure, due to the thermal insulation component is disposed between the battery housing and the battery module, such that the thermal insulation component can isolate the influence of the external temperature field of the battery module on the battery module, and effectively balance the temperature field inside the battery module, thereby reducing the internal heat loss of the battery module and the external temperature field influence. Moreover, the thermal insulation performance of the battery module can reduce the number of times of heating and heating time of the battery module, thereby shortening the charging time of the battery module.

### BRIEF DESCRIPTION OF THE DRAWINGS

To more clearly describe the technical solutions in the embodiments of the present disclosure, the accompanying drawings required for describing the embodiments will be briefly introduced below. Apparently, the drawings in the following description only show some embodiments of the present disclosure and are not intended to limit the present disclosure. Elements having the same reference sign in the drawings are denoted by the same element or similar element. The figures in the drawings do not constitute a scale limitation unless otherwise stated.
FIG. 1 is a three-dimensional schematic view of a battery pack 10 according to an embodiment of the present disclosure.
FIG. 2 is a top view of the battery pack 10 in FIG. 1.
FIG. 3 is a cross-sectional view taken along line X-X of the battery pack 10 of FIG. 2.
FIG. 4 is an enlarged view of a region A in FIG. 3.
FIG. 5 is an enlarged view of a region B in FIG. 3.
FIG. 6 is a schematic structural view of a single-hole thermal insulation pad of the thermal insulation component of the battery pack of FIG. 1.
FIG. 7 is a schematic structural view of a double-hole thermal insulation pad of the thermal insulation component of the battery pack of FIG. 1.
FIG. 8 is a schematic structural view of a semi-open thermal insulation pad of a thermal insulation component of a battery pack according to an embodiment of the present disclosure.
FIG. 9 is a schematic structural view of a rectangular outer contour thermal insulation pad of a thermal insulation component of a battery pack according to an embodiment of the present disclosure.
FIG. 10 is an exploded view of another battery pack according to an embodiment of the present disclosure.
FIG. 11 is a three-dimensional schematic view of still another battery pack according to an embodiment of the present disclosure.
FIG. 12 is a longitudinal sectional view of the battery pack of FIG. 11.
FIG. 13 is an enlarged view of a region C in FIG. 12.
FIG. 14 is a temperature variation diagram of a battery module when the battery module is directly mounted on a housing bottom plate in an embodiment of the present disclosure.
FIG. 15 is a temperature variation curve diagram of the battery module when the battery module is mounted on the housing bottom plate through the thermal insulation component in an embodiment of the present disclosure.

List of reference signs:
- 10: battery pack
- 1: battery module
- 11: module case
- 111: module end plate
- 111a: conductive fixed part
- 111b: fixed foot
- 112: module side plate
- 12: battery
- 2: battery housing
- 21: housing bottom plate
- 21a: first through hole
- 21b: nut
- 22: housing side plate
- 3: thermal insulation component
- 31: single-hole thermal insulation pad
- 32: double-hole thermal insulation pad
- 33: semi-open thermal insulation pad
- 34: rectangular outer contour thermal insulation pad
- 35: strip thermal insulation pad
- 300: second through hole
- 301: groove
- 4: positioning member

The accompanying drawings herein are incorporated and constitute a part of the specification, illustrate embodiments consistent with the present disclosure and, together with the specification to explain the principles of the present disclosure.

### DETAILED DESCRIPTION

To better understand the technical solutions of the present disclosure, the embodiments of the present disclosure are described below in details with reference to the accompanying drawings.

It should be noted that the described embodiments are merely some embodiments rather than all the embodiments of the present disclosure and are not intended to limit the present disclosure.

Terms in the embodiments of the present disclosure are merely used for the purpose of describing particular embodiments, and are not intended to limit the present disclosure. "A/an" and "the" in singular forms used in the embodiments and the appended claims of the present disclosure also include cases of plural meanings, unless other meanings are clearly expressed in a context.

It should be understood that the term "and/or" in this document merely indicates an association relationship for describing associated objects, and represents that three relationships may exist, for example, A and/or B may represent the following three cases: A exists separately, both A and B exist, and B exists separately. In addition, the English character "/" in this document usually indicates an "or" relationship between foregoing and following associated objects.

It should be noted that "up", "down", "left", "right" and other nouns of locality used in the descriptions of the embodiments of the present disclosure are based on angles of the accompanying drawings and shall not be construed as a limit to the present disclosure. In addition, in a context, it should also be understood that when it is mentioned that one element is connected to a position "above" or "below" another element, it indicates that the element may be directly connected to the position "above" or "below" another element, or may be indirectly connected to the position "above" or "below" another element by means of an intermediate element.

In view of the problems of poor thermal insulation effect and longer charging time of the battery module in the existing battery pack, the present disclosure provides a novel battery module as described below.

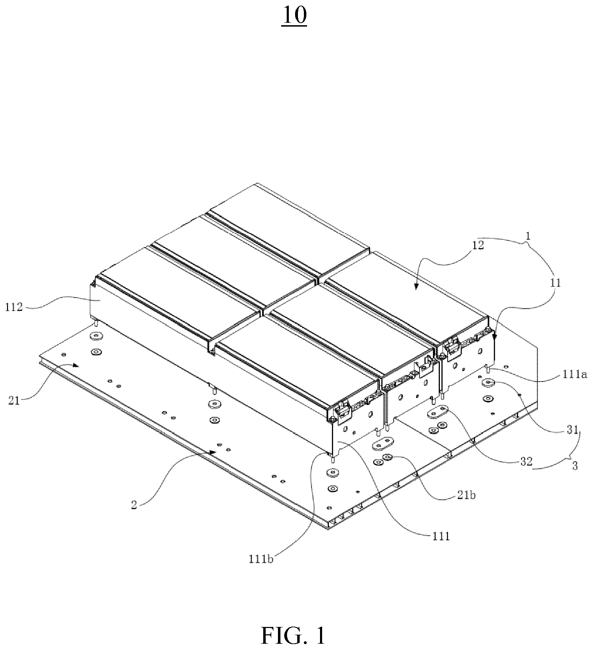

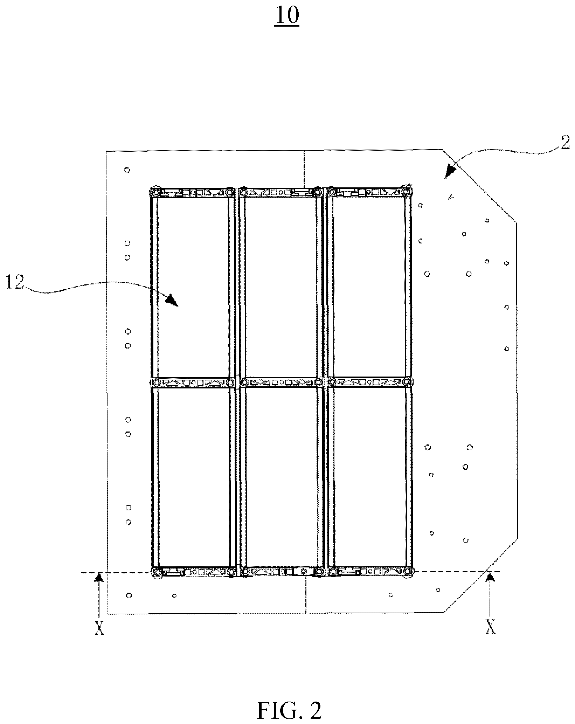

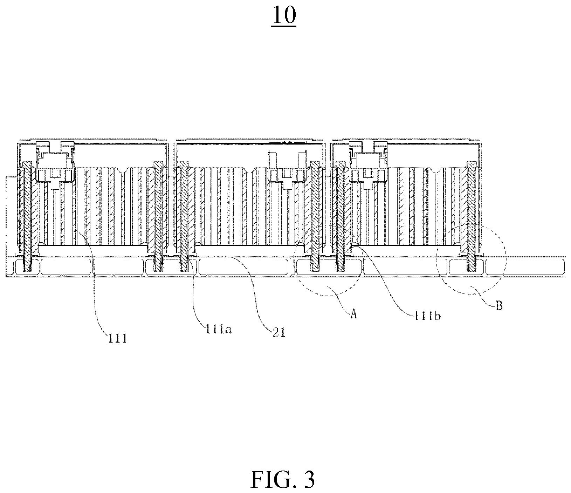

Referring to FIG. 1, FIG. 2 and FIG. 3, an embodiment of the present disclosure provides a battery pack 10 including a battery module 1 and a battery housing 2. The battery housing 2 is configured to accommodate the battery module 1. The battery module 1 is detachably disposed on a bottom wall of the battery housing 2, and a thermal insulation component 3 is disposed between the battery module 1 and the bottom wall of the battery housing 2. The number of the battery modules 1 may be one or plural.

The battery module 1 includes a module case 11 and a plurality of batteries 12. The module case 11 includes a module end plate 111 and a module side plate 112, at least two mutually parallel the module end plate 111 and at least two mutually parallel the module side plate 112 define a first space for accommodating the plurality of batteries 12. Specifically, when the at least two mutually parallel module end plate 111 and the at least two mutually parallel module side plate 112 constitute a module case 11 of rectangular outer contour, the plurality of batteries 12 may be arranged in a matrix and fixed to the inner wall of the module case 11. Where the module end plate 111 is disposed at an end of the battery 12, the module side plate 112 is disposed at a side of the battery 12, the module end plate 111 and the module side plate 112 enclose the first space, and the first space being a rectangular space. In other embodiments, the module end plate 111 and the module side plate 112 may be integrally formed to constitute the module case 11.

The battery housing 2 includes a housing bottom plate 21 and a housing side plate 22, the housing bottom plate 21 and the housing side plate 22 define a second space, and the second space being configured to accommodate the battery module 1. In other embodiments, the housing bottom plate 21 and the housing side plate 22 may be integrally formed to constitute the battery housing 2. It should be noted here that in order to facilitate the representation of the structure of the battery housing 2, in the following description, the bottom wall of the battery housing 2 is represented by the housing bottom plate 21.

The module case 11 and the battery housing 2 each have a conductive portion made of metal, and the conductive portion of the module case 11 is equipotential connected to the conductive portion of the battery housing 2 by at least one conductive fixed part 111a disposed through the thermal insulation component. The conductive portion of the module case 11 may be the module end plate 111 or/and the module side plate 112, and the conductive portion of the battery housing 2 may be the housing bottom plate 21 or another structure of the battery housing 2, to reduce the weight of the battery housing 2 and the module case 11, meanwhile ensure the stability of the mounting of the battery module 1 and save costs. It should be noted here that the portion of the module case 11 connected to the housing bottom plate 21 is made of metal. For example, the module end plate 111 is a composite end plate, and the joint of the conductive fixed part 111a is made of metal. On the one hand, the connection reliability between the module and the battery housing 2 is ensured, on the other hand, the equipotential connection between the module case 11 and the housing can be achieved by the conductive fixed part 111a.

In an embodiment of the present disclosure, the module end plate 111 of the module case 11 and the housing bottom plate 21 are both made of a metal material, and the module case 11 is equipotential connected to the battery housing 2 by the conductive fixed part 111a. The conductive fixed part 111a may be a conductive structure such as a bolt, and the conductive fixed part 111a is disposed in the module case 11 by being inserted into a fixing hole formed in the module case 11.

In an embodiment of the present disclosure, the conductive portion of the module case 11 has an at least one fixed foot 111b corresponding to the at least one fixed part (for example, at least one conductive fixed part 111a) near one end of the battery housing 2. The conductive portion of the battery housing 2 has a first through hole 21a fitted with the fixed foot 111b, and the fixed foot 111b is connected to the corresponding first through hole 21a fitted by the corresponding conductive fixed part 111a. The thermal insulation component 3 is disposed between the fixed foot 111b and the conductive portion of the battery housing 2. Since the joint between the battery module 1 and the battery housing 2 (the metal contact region between the metal fixed foot 111b of the battery module 1 and the battery housing) spreads heat rapidly, the technical effect of this is that the thermal insulation component 3 slows the heat transfer between the fixed foot 111b and the conductive portion of the battery housing 2 to alleviate the unevenness of heat transfer between the original module case 11 and the battery housing 2, thereby ensuring the operating temperature of the battery module 1.

In an embodiment of the present disclosure, the module end plate 111 has a fixed foot 111b, and the housing bottom plate 21 has a first through hole 21a. Where the thermal insulation component 3 is disposed between the fixed foot 111b and the housing bottom plate 21. The number of the conductive fixed parts 111a is set according to the shape of the battery module 1 to ensure that the battery module 1 can be fixed on the housing bottom plate 21. For example, if the outer contour of the battery module 1 is rectangular, the number of the conductive fixed parts 111a is at least four, and the four conductive fixed parts 111a are respectively disposed on four bottom corners of the battery module 1. The bottom end of the conductive fixed part 111a can pass through the thermal insulation component 3 and be inserted into the first through hole 21a. Here, after being inserted into the first through hole 21a, the fixed part 111a can be equipotential connected to the housing bottom plate 21, so that the battery module 1 is electrically connected to the battery housing 2, which facilitates the transfer of static electricity from the battery module 1 to the battery housing 2 and prevents the static electricity affecting the operating effect of the battery module 1.

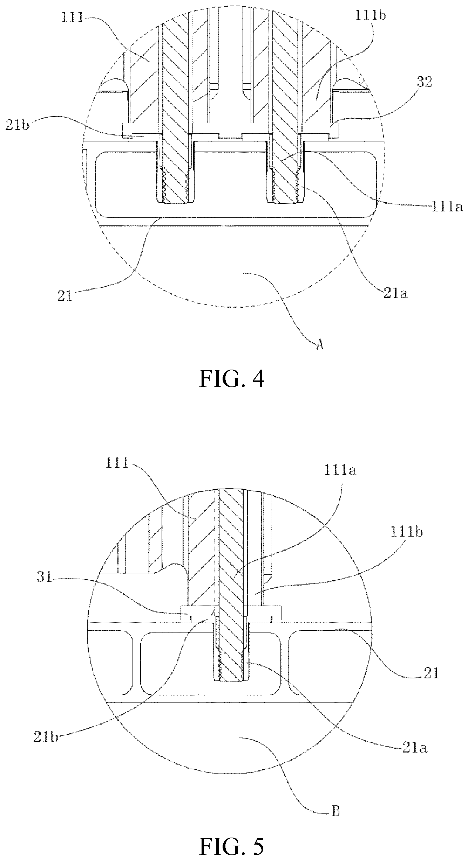

Referring to FIG. 4 and FIG. 5, in order to facilitate the mounting of the conductive fixed part 111a and ensure the stability of the connection between the battery module 1 and the battery housing 2, in an embodiment of the present disclosure, the conductive portion of the battery housing 2 further includes a nut 21b fitted into the first through hole 21a. In an embodiment of the present disclosure, the nut 21b is disposed on the housing bottom plate 21. The conductive fixed part 111a has a thread structure. The conductive fixed part 111a engages with the nut 21b for connecting the battery module 1 and the housing bottom plate 21. The thermal insulation component 3 is disposed between the module end plate 111 and the nut 21b. Here, the thread structure of the conductive fixed part 111a may be integrally formed on the conductive fixed part 111a. Of course, a threaded connecting piece such as a bolt and a screw, may be disposed at the bottom end of the conductive fixed part 111a. After the conductive fixed part 111a is engaged with the nut 21b, the thermal insulation component 3 can be firmly disposed between the battery module 1 and the housing bottom plate 21, and at the same time, since the nut 21b has electrical conductivity, the electrical connection between the conductive fixed part 111a and the housing bottom plate 21 can be enhanced.

The thermal insulation component 3 has a limit structure, and the nut 21b is a rivet nut having a flange face and being riveted on the flange face. In an embodiment of the present disclosure, the rivet nut is mainly made by carbon steel cold heading forming, and is clamped by the deformation zone of the ordinary nut to achieve the purpose of fixing itself. The limit structure is engaged with the flange face of the rivet nut. The limit structure can limit any displacement generated between the flange face of the nut 21b and the thermal insulation component 3, so that the nut 21b and the thermal insulation component 3 are integrated, which can bring the following advantages: 1) facilitating the assembly of the thermal insulation component 3 in the battery pack; 2) limiting the horizontal and vertical displacement between the battery module 1 and the housing bottom plate 21, thereby improving the structural stability of the battery pack.

Specifically, the limit structure is a groove structure, and the groove structure is provided with a groove 301, and the groove 301 is located on a side of the thermal insulation component 3 near the rivet nut. The bottom of the nut 21b is fixed to the housing bottom plate 21. When assembling the battery module 1, the thermal insulation component 3 and the battery housing 2, the conductive fixed part 111a can pass through the thermal insulation component 3 and be aligned with the nut 21b, so that the bottom end of the conductive fixed part 111a is screwed into the nut 21b by rotating the conductive fixed part 111a. At the same time, the top of the nut 21b is clipped into the groove 301, the nut 21b is wholly wrapped by the housing bottom plate 21 and the thermal insulation component 3, and there is no gap between the housing bottom plate 21 and the thermal insulation component 3, so that the connection between the thermal insulation component 3 and the housing bottom plate 21 is more firm.

The thermal insulation component 3 includes at least one second through hole 300. The groove 301 is disposed coaxially with the second through hole 300, and the groove 301 has a circular structure. The second through hole 300 here should also be disposed coaxially with the first through hole 21a when assembling the thermal insulation component 3. Therefore, the bottom end of the conductive fixed part 111a sequentially passes through the second through hole 300 and the nut 21b to reach the inside of the first through hole 21a, and the spacing between the nut 21b and the conductive fixed part 111a can be reduced by screwing or the like, so that the battery module 1, the thermal insulation component 3 and the battery housing 2 are fastened mutually.

Since the connection position of the fixed foot 111b of the battery module 1 and the battery housing 2 is a region where heat is transferred between the battery module 1 and the battery housing 2, so that the temperature field of the entire battery module 1 is unevenly biased, and the temperature is low at the position near the fixed foot 111b of the battery module 1 and high at the position far away, thereby affecting the performance of the battery module 1. Therefore, the thermal insulation component 3 can isolate the influence of the external temperature field on the battery module 1. Moreover, when the thermal insulation performance of the battery module 1 is good, the number of times of heating and heating time of the battery module 1 can be reduced, thereby shortening the charging time of the battery module 1.

When the number of the battery modules 1 is plural, since the distance between the adjacent plurality of battery modules 1 is relatively short, there is a case where the distance between the plurality of conductive fixed parts 111a is relatively short. In this case, it is not suitable to place a plurality of thermal insulation components 3 in the region adjacent to the conductive fixed part 111a. To solve this problem, the thermal insulation component 3 includes at least two second through holes 300, and two grooves 301 respectively disposed coaxially with the two second through holes 300. Thus, one thermal insulation component 3 can be disposed between the plurality of conductive fixed parts 111a and the housing bottom plate 21.

In an embodiment of the present disclosure, in order to isolate the temperature transfer between the battery module 1 and the battery housing 2 for a long period of time, so as to ensure that the thermal insulation performance of the thermal insulation component 3 reaches the basic requirement of the thermal insulation of the battery module 1, thereby effectively balancing the temperature field inside the battery module 1 and reducing heat transfer between the internal temperature field and the external temperature field. According to the invention, the thermal insulation component 3 has a thermal conductivity of < 0.3 W·m⁻¹·K⁻¹, and at the same time, those skilled in the art can select the material of the thermal insulation component 3 according to the thermal insulation requirement to control the thermal conductivity of the thermal insulation component 3 within a suitable range. For example, the thermal insulation component 3 may have a thermal conductivity of 0.28 W·m⁻¹·K⁻¹, 0.25 W·m⁻¹·K⁻¹, 0.20 W·m⁻¹·K⁻¹, 0.15 W·m⁻¹·K⁻¹, 0.10 W·m⁻¹·K⁻¹, and the like, including any and all ranges and subranges therein, as long as the technical solutions of the present disclosure can be achieved.

In an embodiment of the present disclosure, the long-term use temperature (i.e., tolerable temperature) of the thermal insulation component 3 is ≥ 85°C, for example, 85°C, 90°C, 95°C, 100°C, 110°C, 120°C, 130°C, 140°C, 150°C, and the like, including any and all ranges and subranges therein, as long as the technical solutions of the present disclosure can be achieved. In another embodiment of the present disclosure, the thermal insulation component 3 may be made of a thermal insulation material having a tolerable temperature of > 130°C. Since the thermal insulation component 3 is in a relatively high temperature state during use for a long period of time, if the tolerable temperature of the thermal insulation component is too low, the thermal insulation component 3 may undergo creep, aging, etc. during long-term use, thereby causing the torque of the joint of the conductive fixed part 111a to decay, causing the connection failure between the battery module 1 and the battery housing 2, and even the battery module 1 is detached. Therefore, the heat resistance of the thermal insulation component 3 of the present disclosure is good, and can enhance the stability of the connection between the battery module 1 and the battery housing 2 and increase the service life of the battery pack.

In addition, the thermal insulation component 3 also needs to have good mechanical properties to ensure that the thermal insulation component 3 maintains structural stability during assembly and use. According to the invention, the thermal insulation component 3 has a compressive strength of ≥ 350 MPa and a tensile strength of ≥ 300 MPa to ensure that the thermal insulation component 3 has a good deformation amount, and during assembly and use, the thermal insulation component 3 not only can bear the weight of the battery module 1 and the clamping force of the conductive fixed part 111a, but also can compensate the assembly tolerance between the fixed foot 111b and the housing and keep the connection of the battery module 1 stable under severe conditions such as module vibration and impact. In an example, the thermal insulation component 3 may have a compressive strength of 350 Mpa, 400 Mpa, 450 Mpa, 500 Mpa, and the like, including any and all ranges and subranges therein, as long as the technical solutions of the present disclosure can be achieved. In another example, the thermal insulation component 3 may have a tensile strength of 300 Mpa, 350 Mpa, 400 Mpa, 450 Mpa, 500 Mpa, and the like, including any and all ranges and subranges therein, as long as the technical solutions of the present disclosure can be achieved. According to the invention, the thermal insulation component 3 has a yield strength of ≥ 200 MPa to ensure that the thermal insulation component 3 can withstand a large yield force and to prevent the situation that the thermal insulation component 3 is crushed, broken, etc. during the process of fixing the battery module 1 to the housing by the conductive fixed part 111a, which causes the failure of the thermal insulation performance of the thermal insulation component 3 and even causes the connection failure between the battery module 1 and the battery housing 2. For example, the thermal insulation component 3 may have a yield strength of 200 Mpa, 250 Mpa, 300 Mpa, 350 Mpa, 400 Mpa, 450 Mpa, 500 Mpa, and the like, including any and all ranges and subranges therein, as long as the technical solutions of the present disclosure can be achieved. Based on the above-mentioned long-term use performance requirements, the thermal insulation component 3 may be made of epoxy resin, PA66+50% GF glass fiber reinforced nylon or the like. Since the epoxy resin has low thermal conductivity and high mechanical properties, the structure has the function of keeping the temperature of the battery module 1 while satisfying the conventional mechanical properties. The thermal insulation component 3 can be produced by lamination when it is made of epoxy resin. Thus, the thermal insulation component 3 of the battery pack of the present disclosure has good mechanical properties, so that the battery pack has a stable overall structure and can be used for a long time.

In order to avoid waste of materials and improve the stability between the battery module 1 and the battery housing 2, in an embodiment of the present disclosure, the thickness of the thermal insulation component 3 should be greater than 2 mm. for example, the thermal insulation component 3 may have a thickness of 2mm, 2.5mm, 3.0mm, 3.5mm, 4.0mm, 4.5mm, 5.0mm, 6mm, 6mm, 8mm, and the like (including any and all ranges and subranges therein, e.g., 2-8mm, 3-8cmm, etc.), as long as the technical solutions of the present disclosure can be achieved. In another embodiment of the present disclosure, when the thickness of the thermal insulation component 3 is less than 2 mm, the thermal insulation performance does not meet the minimum requirement of thermal insulation, and when the thickness of the thermal insulation component 3 exceeds a limit thickness, the excessively thick thermal insulation component 3 affects the stability of the connection between the battery module 1 and the battery housing 2. Of course, those skilled in the art may also set the limit thickness of the thermal insulation component 3 according to the actual mounting requirements. The proper thickness of the thermal insulation component 3 may ensure efficient use of the material while also ensure the need for mounting and connection.

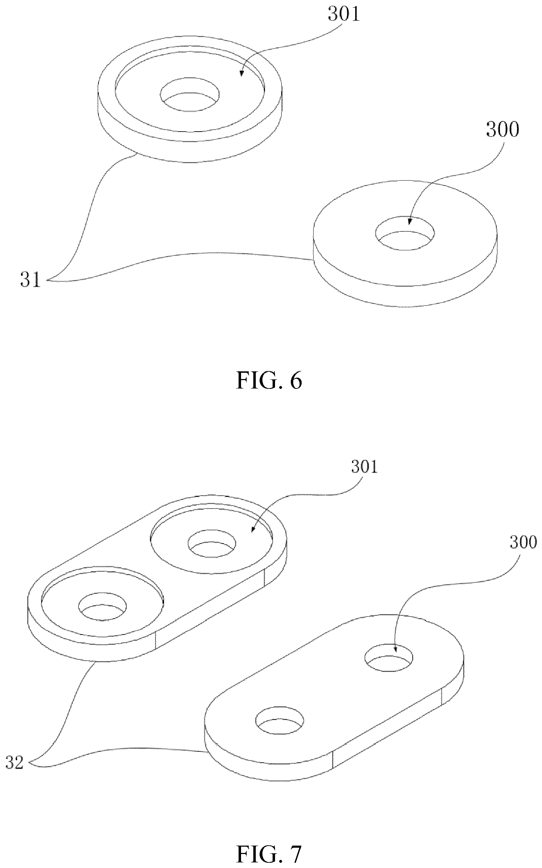

In some embodiments of the present disclosure, the thermal insulation component 3 includes a plurality of thermal insulation pads, and the number of the thermal insulation pads may be plural, and the shape may be various. As shown in FIG. 6 and FIG. 7, the thermal insulation pad may be a single-hole thermal insulation pad 31 or a double-hole thermal insulation pad 32, and the number of the single-hole thermal insulation pads 31 and the double-hole thermal insulation pads 32 may be set according to actual requirements. The single-hole thermal insulation pad 31 has a circular outer contour, and is provided with at least one second through hole 300 and at least one groove 301 disposed coaxially with the at least one second through hole 300. Each of the rivet nuts is mounted in one groove 301. The single-hole thermal insulation pad 31 is only provided with one groove 301 matched with a fastener, and the double-hole thermal insulation pad 3232 may be provided with two mutually symmetric grooves 301 to prevent the battery module 1 from rotating during the process of being fixed to the bottom wall of the battery housing 2.

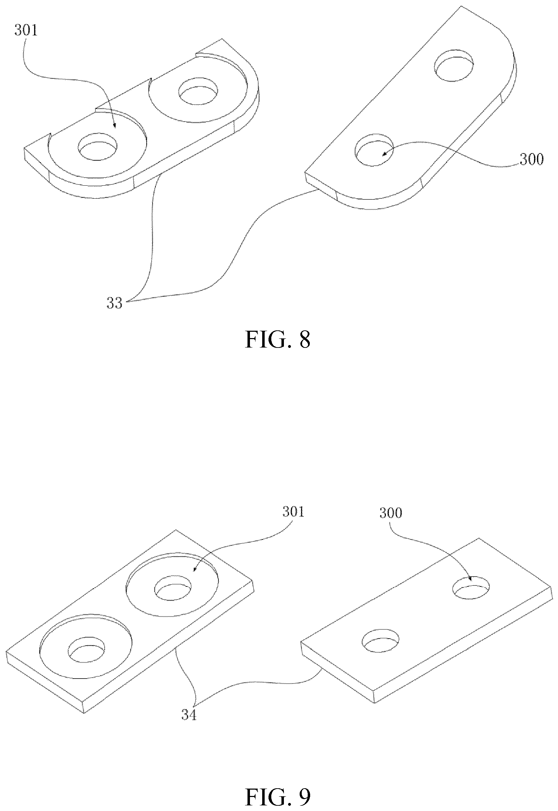

Referring to FIG. 8 and FIG. 9, in some embodiments of the present disclosure, the thermal insulation component 3 may further include a semi-open thermal insulation pad 33 and a rectangular outer contour thermal insulation pad 34. The semi-open thermal insulation pad 33 has a rectangular outer contour, and two corners adjacent in the length direction are rounded. The semi-open thermal insulation pad 33 is provided with at least two second through holes 300, and at least two mounting grooves respectively disposed coaxially with the at least two second through holes 300. The mounting grooves are the grooves 301. The mounting slot is a circular groove with a notch, and the notch is provided in another length direction of the thermal insulation component 3. The rectangular outer contour thermal insulation pad 34 has a rectangular outer contour, and is provided with at least two through holes, and at least two mounting grooves respectively disposed coaxially with the at least two through holes. Each of the rivet nuts is mounted in one mounting slot. Thermal insulation pads of different shapes are combined to form the thermal insulation component 3, finally balancing the temperature field inside the battery module 1 and reducing the internal temperature loss and the external temperature field influence.

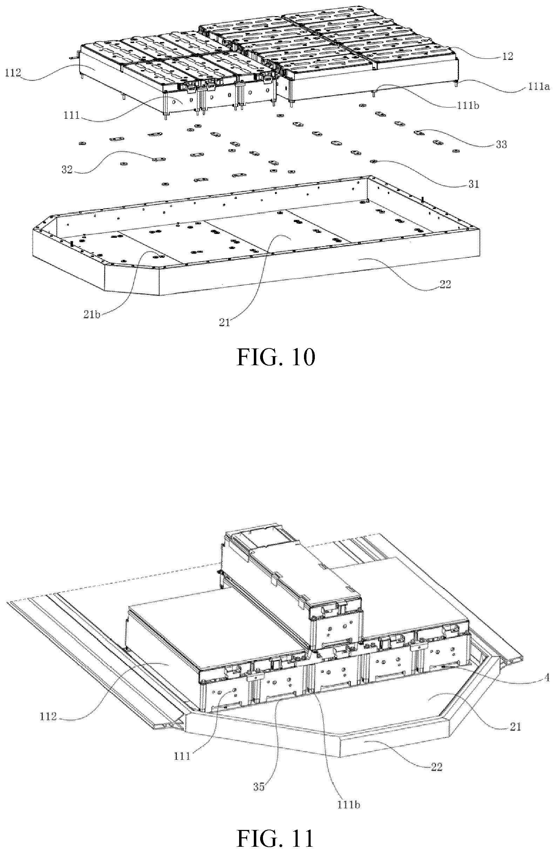

Referring to FIG. 10, the thermal insulation component 3 of the battery pack 10 includes a single-hole thermal insulation pad 31, a double-hole thermal insulation pad 32 and a semi-open thermal insulation pad 33. The thermal insulation component 3 makes the internal temperature field of the battery module 1 of the battery pack 10 uniform, and also plays a role in thermal insulation.

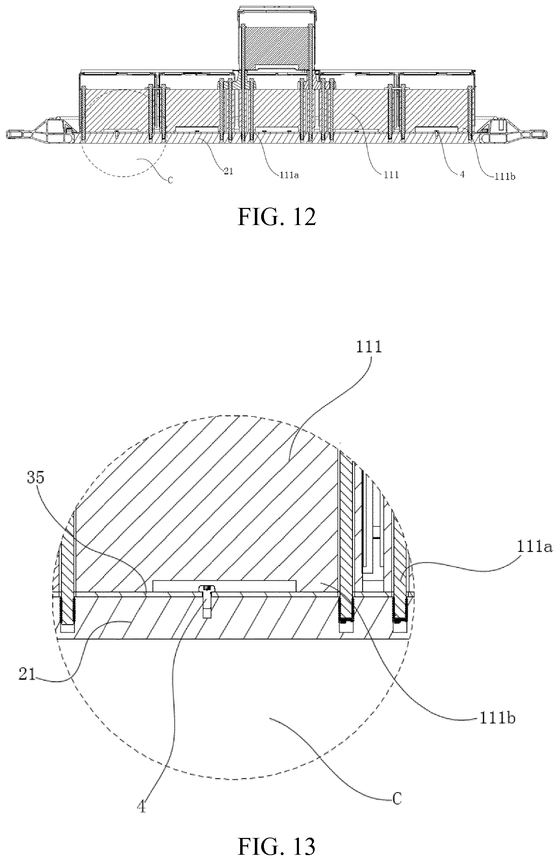

Referring to FIG. 11, FIG. 12 and FIG. 13, the thermal insulation component 3 may also be in the shape of a strip and adopt a strip thermal insulation pad 35. The thermal insulation component 3 is provided with at least one the second through hole 300, and each of the second through holes 300 corresponds to one conductive fixed part 111a. Meanwhile, the battery pack 10 provided by the present disclosure further includes a positioning member 4. The number of the positioning members 4 should be plural, a bottom end of each of the positioning members 4 passes through the thermal insulation component 3 and is fixed in the housing bottom plate 21. The positioning member 4 may be a fastening nail or another fixed device. The positioning member 4 can stably fix the thermal insulation component 3 on the housing bottom plate 21. Of course, the positioning member 4 can be mounted in a detachable mode. The strip thermal insulation pad 35 can increase the heat insulation area between the battery module 1 and the battery housing 2, and further improve the thermal insulation effect on the battery module 1.

In a battery pack 10, since the shape and structure of the module case 11 can be various, the thermal insulation component 3 may include various thermal insulation pads, such as a single-hole thermal insulation pad 31, a double-hole thermal insulation pad 32, a semi-open thermal insulation pad 33, a rectangular outer contour thermal insulation pad 34 and a strip thermal insulation pad 35, and these thermal insulation pads can be used in combination to improve the stability of the connection between the battery module 1 and the battery housing 2.

Specifically, since the housing bottom plates 21 of different battery packs are different in structure and the environment in which the battery housing 2 is located may also vary, various types of thermal insulation pads may be combined into a thermal insulation component 3 to reduce the influence of the temperature difference of the battery housing 2 on the battery module 1 and balance the internal and external temperature fields of the battery module 1, so that the battery 12 in the battery module 1 is in a stable temperature field, thereby avoiding the local temperature from being too high or too low. For example, in a region where the temperature of the battery housing 2 is low, a thermal insulation pad having better thermal insulation performance can be used, specifically, a thicker thermal insulation pad is used, and in a region where the temperature of the battery housing 2 is high, a thermal insulation pad having general thermal insulation performance can be used.

The advantages of the above-mentioned thermal insulation component 3 using the combined thermal insulation pads are as follows: 1) the internal temperature field of the battery module 1 is balanced; 2) the thermal insulation pad is selected based on the structure of the battery housing 2 to improve the stability of assembling of the battery module 1 in the battery housing 2; and 3) the materials are saved, thereby avoiding waste of unnecessary materials.

In some embodiments of the present disclosure, since the conductive fixed part 111a and the battery housing 2 are both made of a metal material, in order to facilitate the equal potential between the conductive fixed part 111a and the battery housing 2, the thermal insulation component 3 may also be made of a combination of a conductive material and an insulating material such that the thermal insulation component 3 may also be electrically conductive, so that the electrical connection between the conductive fixed part 111a and the battery housing 2 is more stable.

The thermal insulation component 3 of the present disclosure is convenient to assemble, and at the same time, because of the light weight and low cost, the thermal insulation component can be used widely, thereby enhancing the thermal insulation performance of the battery module 1 and reducing the waste of energy.

Based on the above designs, the present disclosure also performs related thermal insulation effect tests, and the initial conditions of each test are the same and the initial temperature of a cell is 40°C.

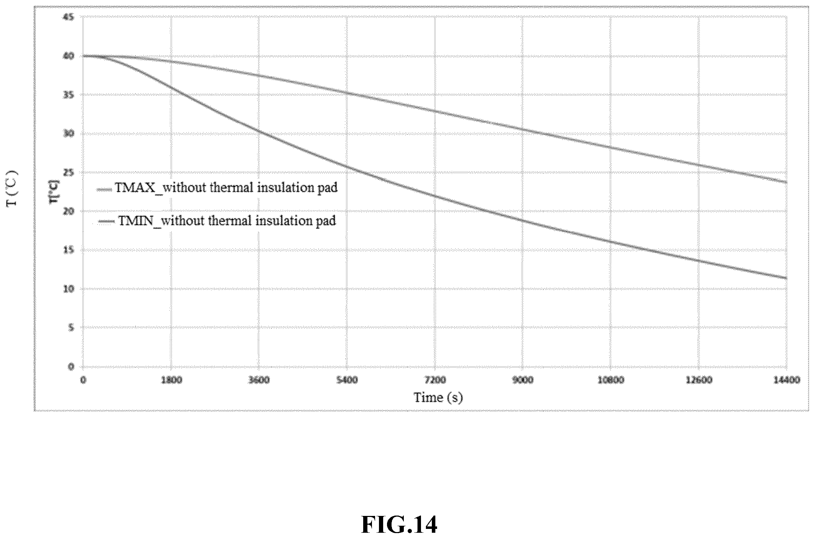

Referring to FIG. 14, after the thermal insulation component 3 of the present disclosure is not used and when a elapsed time t = 4 h, the lowest temperature of the cell is 11.4°C, the temperature drop reaches 28.6°C, and the total thermal resistance is about 11.5 W/K.

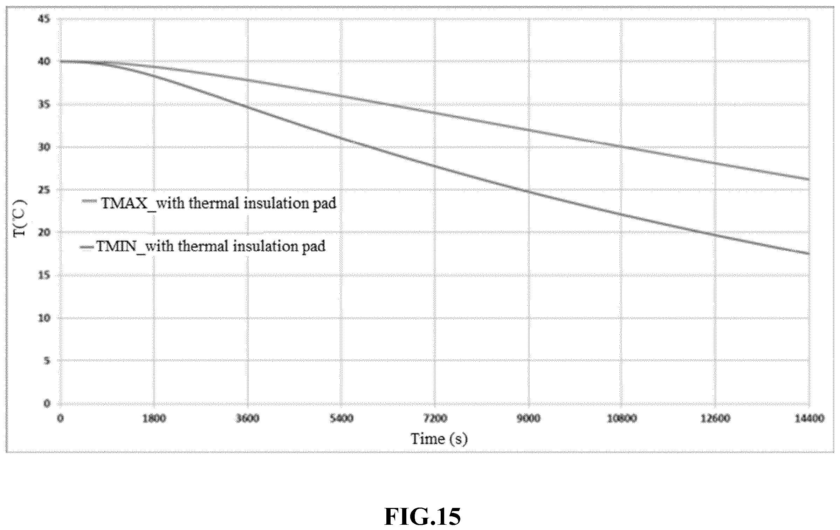

Referring to FIG. 15, after the thermal insulation component 3 of the present disclosure is used and when the elapsed time t = 4 h, the lowest temperature of the cell is 17.5°C, the temperature drop is 22.5°C, and the total thermal resistance is about 16 W/K.

It can be seen from the above tests that the thermal insulation component 3 of the embodiment can keep the temperature of the battery module 1, and the total thermal resistance of the lowest temperature cell and the environment is increased from 11.5 W/K to 16 W/K, which is improved by nearly 39%, thereby greatly reducing the heat loss of the battery module 14.

It should be noted here that the battery pack of the present disclosure may also be provided with other structures such as a damping component on the basis of the above. The damping component may be an elastic piece or a damping device in the existing technology. The number of the damping components is the same as the number of the thermal insulation components 3, and each damping component corresponds to one thermal insulation component 3. Each of the damping components is assembled on the corresponding thermal insulation component 3 and located between the conductive fixed part 111a and the corresponding thermal insulation component 3. Therefore, the damping effect of the battery pack of the present disclosure is much better. The transfer of vibrations between the battery housing 2 and the battery module 1 is weakened, and the collision between the battery module 1 and the battery housing 2 is reduced, thereby protecting the battery module 1 and increasing the service life of the battery pack.

In some embodiments of the present disclosure, the thermal insulation component 3 has at least one damping structure and the damping structure may be a damping layer. The damping component can be combined with the thermal insulation component 3 to form a thermal insulation damping plate. The thermal insulation damping plate is composed of a damping layer and a thermal insulation layer that are laminated in a staggered manner. Of course, according to the actual requirements, the thermal insulation damping plate can be made of one material, and the material has the effects of thermal insulation and damping.

The foregoing descriptions are merely preferred embodiments of the present disclosure, and are not intended to limit the present disclosure. For persons skilled in the art, the present disclosure may have a variety modifications and changes.

## Claims

1. A battery pack (10), comprising:
at least one battery module (1); and
a battery housing (2), configured to accommodate the battery module (1);
wherein
the battery module (1) is detachably disposed on a bottom wall of the battery housing (2), and
a thermal insulation component (3) is disposed between the battery module (1) and the bottom wall of the battery housing (2); the thermal insulation component (3) has at least one layer of damping structure; the thermal insulation component has a thermal conductivity of < 0.3 W·m⁻¹·K⁻¹; the thermal insulation component (3) has a compressive strength of ≥ 350 MPa; the thermal insulation component (3) has a tensile strength of ≥ 300 MPa; and the thermal insulation component (3) has a yield strength of ≥ 200 MPa.

2. The battery pack (10) according to claim 1, wherein the battery module (1) has a module case (11) for accommodating a plurality of batteries (12); and
the module case (11) and the battery housing (2) each have a conductive portion made of metal, the conductive portion of the module case (11) is equipotential connected to the conductive portion of the battery housing (2) through a conductive fixed part (111a), and the conductive fixed part (111a) passes through the thermal insulation component (3).

3. The battery pack (10) according to claim 2, wherein the conductive portion of the module case (11) is provided with a fixed foot (111b) near one end of the battery housing (2);
the conductive portion of the battery housing (2) has a first through hole (21a) fitted with the fixed foot (111b);
the fixed foot (111b) and the corresponding first through hole (21a) fitted are connected by a fixed part; and
the thermal insulation component (3) is disposed between the fixed foot (111b) and the conductive portion of the battery housing (2).

4. The battery pack (10) according to claim 3, wherein the conductive portion of the battery housing (2) is further provided with a nut (21b) fitted into the first through hole (21a);
the fixed part has a thread structure; and the fixed part matches with the nut (21b) for connecting the battery module (1) and the battery housing (2); and
the thermal insulation component (3) is disposed between the module end plate (111) and the nut (21b).

5. The battery pack (10) according to claim 4, wherein the bottom end of the fixed part pass through the thermal insulation component (3) and be inserted into the first through hole (21a), and the fixed part is a conductive fixed part (111a).

6. The battery pack (10) according to claim 5, wherein the thermal insulation component (3) has a limit structure, the nut (21b) has a flange face; and
the limit structure is fitted with the flange face of the nut (21b).

7. The battery pack (10) according to claim 6, wherein the limit structure is a groove (301) structure, and the groove (301) structure is located on a side of the thermal insulation component (3) near the nut (21b).

8. The battery pack (10) according to claim 7, wherein the thermal insulation component (3) comprises at least one second through hole (300); and
the groove (301) structure is disposed coaxially with the second through hole (300).

9. The battery pack (10) according to claim 7, wherein the thermal insulation component (3) comprises at least two second through holes (300), and two groove (301) structures respectively disposed coaxially with the two second through holes (300).

10. The battery pack (10) according to claim 1, wherein the thermal insulation component (3) comprises a plurality of thermal insulation pads.

11. The battery pack (10) according to claim 10, wherein the thermal insulation component (3) is a single-hole thermal insulation pad (31), and/or a double-hole thermal insulation pad (32); or
the thermal insulation component (3) is a semi-open thermal insulation pad (33), a rectangular outer contour thermal insulation pad (34), and/or a strip thermal insulation pad (35).

12. The battery pack (10) according to claim 1, wherein the thermal insulation component (3) has a thickness of 2-8 mm.

## Patentansprüche

1. Batteriepack (10), das Folgendes umfasst:
mindestens ein Batteriemodul (1); und
ein Batteriegehäuse (2), das dazu ausgelegt ist, das Batteriemodul (1) aufzunehmen;
wobei
das Batteriemodul (1) lösbar an einer Bodenwand des Batteriegehäuses (2) angeordnet ist, und
eine Wärmeisolierungskomponente (3) zwischen dem Batteriemodul (1) und der Bodenwand des Batteriegehäuses (2) angeordnet ist; die Wärmeisolierungskomponente (3) mindestens eine Schicht einer Dämpfungsstruktur aufweist, die Wärmeisolierungskomponente eine Wärmeleitfähigkeit von < 0,3 W·m⁻¹·K⁻¹ aufweist; die Wärmeisolierungskomponente (3) eine Druckfestigkeit von ≥ 350 MPa aufweist; die Wärmeisolierungskomponente (3) eine Zugfestigkeit von ≥ 300 MPa aufweist und die Wärmeisolierungskomponente (3) eine Streckgrenze von ≥ 200 MPa aufweist.

2. Batteriepack (10) nach Anspruch 1, wobei das Batteriemodul (1) eine Modulumhausung (11) zum Aufnehmen einer Vielzahl von Batterien (12) aufweist; und
die Modulumhausung (11) und das Batteriegehäuse (2) jeweils einen leitfähigen Abschnitt aufweisen, der aus Metall besteht, der leitfähige Abschnitt der Modulumhausung (11) über ein leitfähiges festes Teil (111a) äquipotenzial mit dem leitfähigen Abschnitt des Batteriegehäuses (2) verbunden ist, und das leitfähige feste Teil (111a) durch die Wärmeisolierungskomponente (3) verläuft.

3. Batteriepack (10) nach Anspruch 2, wobei der leitfähige Abschnitt der Modulumhausung (11) in der Nähe von einem Ende des Batteriegehäuses (2) mit einem festen Fuß (111b) versehen ist;
der leitfähige Abschnitt des Batteriegehäuses (2) ein erstes Durchgangsloch (21a) aufweist, in das der feste Fuß (111b) eingesetzt ist;
der feste Fuß (111b) und das entsprechende erste Durchgangsloch (21a) eingesetzt über ein festes Teil verbunden sind; und
die Wärmeisolierungskomponente (3) zwischen dem festen Fuß (111b) und dem leitfähigen Abschnitt des Batteriegehäuses (2) angeordnet ist.

4. Batteriepack (10) nach Anspruch 3, wobei der leitfähige Abschnitt des Batteriegehäuses (2) ferner mit einer Mutter (21b) versehen ist, die in das erste Durchgangsloch (21a) eingesetzt ist;
das feste Teil eine Gewindestruktur aufweist; und das feste Teil zum Verbinden des Batteriemoduls (1) und des Batteriegehäuses (2) zur Mutter (21b) passt; und
die Wärmeisolierungskomponente (3) zwischen der Modulendplatte (111) und der Mutter (21b) angeordnet ist.

5. Batteriepack (10) nach Anspruch 4, wobei das untere Ende des festen Teils durch die Wärmeisolierungskomponente (3) verläuft und in das erste Durchgangsloch (21a) eingesteckt ist und das feste Teil ein leitfähiges festes Teil (111a) ist.

6. Batteriepack (10) nach Anspruch 5, wobei die Wärmeisolierungskomponente (3) eine Begrenzungsstruktur aufweist, die Mutter (21b) eine Flanschseite aufweist; und
die Begrenzungsstruktur auf der Flanschseite der Mutter (21b) eingesetzt ist.

7. Batteriepack (10) nach Anspruch 6, wobei die Begrenzungsstruktur eine Nut(301)-Struktur ist, und die Nut(301)-Struktur auf einer Seite der Wärmeisolierungskomponente (3) in der Nähe der Mutter (21b) angeordnet ist.

8. Batteriepack (10) nach Anspruch 7, wobei die Wärmeisolierungskomponente (3) mindestens ein zweites Durchgangsloch (300) umfasst; und
die Nut(301)-Struktur koaxial zum zweiten Durchgangsloch (300) angeordnet ist.

9. Batteriepack (10) nach Anspruch 7, wobei die Wärmeisolierungskomponente (3) mindestens zwei zweite Durchgangslöcher (300) umfasst, und zwei Nut(301)-Strukturen jeweils koaxial zu den zwei zweiten Durchgangslöchern (300) angeordnet sind.

10. Batteriepack (10) nach Anspruch 1, wobei die Wärmeisolierungskomponente (3) eine Vielzahl von Wärmeisolierungsauflagen umfasst.

11. Batteriepack (10) nach Anspruch 10, wobei die Wärmeisolierungskomponente (3) eine Wärmeisolierungsauflage (31) mit einem Loch und/oder eine Wärmeisolierungsauflage (32) mit zwei Löchern ist; oder
die Wärmeisolierungskomponente (3) eine halb geöffnete Wärmeisolierungsauflage (33), eine Wärmeisolierungsauflage (34) mit einer rechteckigen Außenkontur und/oder ein Wärmeisolierungsauflagestreifen (35) ist.

12. Batteriepack (10) nach Anspruch 1, wobei die Wärmeisolierungskomponente (3) eine Dicke von 2 bis 8 mm aufweist.

## Revendications

1. Bloc-batterie (10) comprenant :
au moins un module de batterie (1) ; et
un boîtier de batterie (2) configuré pour loger le module de batterie (1) ;
dans lequel :
le module de batterie (1) est disposé, de manière détachable, sur une paroi inférieure du boîtier de batterie (2), et
un composant thermiquement isolant (3) est disposé entre le module de batterie (1) et la paroi inférieure du boîtier de batterie (2) ; le composant thermiquement isolant (3) a au moins une couche de structure d'amortissement ; le composant thermiquement isolant a une conductivité thermique de < 0,3 W . m⁻¹ · K⁻¹ ; le composant thermiquement isolant (3) a une résistance à la compression de ≥ 350 MPa ; le composant thermiquement isolant (3) a une résistance à la traction de ≥ 300 MPa ; et le composant thermiquement isolant (3) a une limite d'élasticité de ≥ 200 MPa.

2. Bloc-batterie (10) selon la revendication 1, dans lequel le module de batterie (1) a un boîtier de module (11) pour loger une pluralité de batteries (12) ; et
le boîtier de module (11) et le boîtier de batterie (2) ont chacun une partie conductrice réalisée à partir de métal, la partie conductrice du boîtier de module (11) est raccordée, de manière équipotentielle, à la partie conductrice du boîtier de batterie (2) par le biais d'une partie fixe conductrice (111a), et la partie fixe conductrice (111a) passe par le composant thermiquement isolant (3).

3. Bloc-batterie (10) selon la revendication 2, dans lequel la partie conductrice du boîtier de module (11) est prévue avec un pied fixe (111b) à proximité d'une extrémité du boîtier de batterie (2) ;
la partie conductrice du boîtier de batterie (2) a un premier trou débouchant (21a) monté avec le pied fixe (111b) ;
le pied fixe (111b) et le premier trou débouchant (21a) correspondant monté sont raccordés par une partie fixe ; et
le composant thermiquement isolant (3) est disposé entre le pied fixe (111b) et la partie conductrice du boîtier de batterie (2).

4. Bloc-batterie (10) selon la revendication 3, dans lequel la partie conductrice du boîtier de batterie (2) est en outre prévue avec un écrou (21b) monté dans le premier trou débouchant (21a) ;
la partie fixe a une structure de filet ; et la partie fixe correspond à l'écrou (21b) pour raccorder le module de batterie (1) et le boîtier de batterie (2) ; et
le composant thermiquement isolant (3) est disposé entre la plaque d'extrémité de module (111) et l'écrou (21b).

5. Bloc-batterie (10) selon la revendication 4, dans lequel l'extrémité inférieure de la partie fixe passe à travers le composant thermiquement isolant (3) et est insérée dans le premier trou débouchant (21a), et la partie fixe est une partie fixe conductrice (111a).

6. Bloc-batterie (10) selon la revendication 5, dans lequel le composant thermiquement isolant (3) a une structure de limite, l'écrou (21b) a une face de bride ; et
la structure de limite est montée avec la face de bride de l'écrou (21b).

7. Bloc-batterie (10) selon la revendication 6, dans lequel la structure de limite est une structure de gorge (301), et la structure de gorge (301) est positionnée sur un côté du composant thermiquement isolant (3) à proximité de l'écrou (21b).

8. Bloc-batterie (10) selon la revendication 7, dans lequel le composant thermiquement isolant (3) comprend au moins un second trou débouchant (300) ; et
la structure de gorge (301) est disposée, de manière coaxiale, par rapport au second trou débouchant (300).

9. Bloc-batterie (10) selon la revendication 7, dans lequel le composant thermiquement isolant (3) comprend au moins deux seconds trous débouchants (300), et deux structures de gorge (301) respectivement disposées de manière coaxiale par rapport aux deux seconds trous débouchants (300).

10. Bloc-batterie (10) selon la revendication 1, dans lequel le composant thermiquement isolant (3) comprend une pluralité de coussinets thermiquement isolants.

11. Bloc-batterie (10) selon la revendication 10, dans lequel le composant thermiquement isolant (3) est un coussinet thermiquement isolant à un seul trou (31) et/ou un coussinet thermiquement isolant à deux trous (32) ; ou bien
le composant thermiquement isolant (3) est un coussinet thermiquement isolant semi-ouvert (33), un coussinet thermiquement isolant à contour externe rectangulaire (34) et/ou un coussinet thermiquement isolant à bande (35).

12. Bloc-batterie (10) selon la revendication 1, dans lequel le composant thermiquement isolant (3) a une épaisseur de 2 à 8 mm.
